# EUROPEAN PATENT SPECIFICATION

(11) **EP 3 513 893 B1**
(45) Date of publication and mention of the grant of the patent: **18.11.2020**
(21) Application number: 19152941.1
(22) Date of filing: 22.01.2019
(51) Int. Cl.: B23C 5/28

(54) **CUTTING TOOL**
SCHNEIDWERZEUG
OUTIL DE COUPE

(30) Priority: 23.01.2018 JP 2018008801
(43) Date of publication of application: 24.07.2019
(73) Proprietor: Matsuura Machinery Corporation, Fukui City, Fukui (JP)
(72) Inventor: AMAYA, Kouichi, Fukui City, Fukui (JP); TANAKA, Ryuzo, Fukui City, Fukui (JP); KANO, Yoshiaki, Fukui City, Fukui (JP); TAKEZAWA, Yasunori, Fukui City, Fukui (JP); IGARASHI, Tetsuya, Fukui City, Fukui (JP)
(74) Representative: Lambacher, Michael

(56) References cited:
- EP-A1- 2 915 616
- EP-A1- 3 178 593
- DE-A1- 3 104 752
- DE-A1- 10 207 661
- DE-B3-102009 030 587
- FR-A- 1 287 927
- JP-U- S6 420 221
- US-A- 960 526

## Description

### [Technical Field]

The present invention relates to a cutting tool according to the preamble of any of claims 1 and 2. Such a cutting tool is known from JP S64 20221 U1.

### [Background Art]

A variety of configurations have been proposed for a cutting tool in which coolant is used.

However, prior art which has disclosed a configuration in which coolant is directly supplied to a cutting edge to efficiently cool the cutting edge is not readily available and almost an exception.

In particular, in the case of a cutting tool which has cutting edges formed by a plurality of side surfaces on both sides raised at a side portion in a longitudinal direction, there has been so far proposed no particular configuration in which coolant is directly supplied to each of the plurality of cutting edges.

Apart from the above-described cutting tool, as a prior art in which coolant is supplied to a leading end of a cutting edge in a longitudinal direction or in the vicinity of the leading end, for example, in JP 2005 502484 A, a coolant passage pipe (a central conduit 12) extended in the longitudinal direction from a rear surface of a blade 36 of a cutting end portion at a leading end of a cutting tool 30 is used to supply coolant to the blade 36 (Abstract and drawings which are an integral part thereof).

Where the above-described configuration of JP 2005 502484 A is applied to the cutting tool, the coolant passage pipe is extended up to the leading end of each of the plurality of cutting edges formed by being raised at a side portion in the longitudinal direction and coolant is supplied.

However, the above-described configuration results in reduction in an area of the leading end of the cutting edge which exhibits a cutting function.

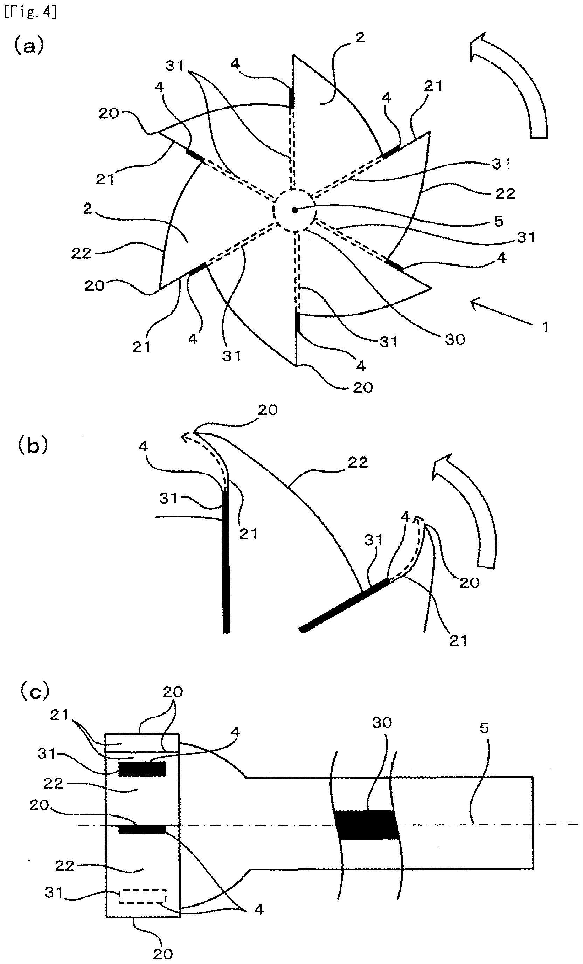

In contrast thereto, JP 2016 144865 A relates to a drill equipped with a curved cutting edge, for a flank 15 that faces a chip-removing groove surface 16, a configuration is adapted such that a coolant is directly supplied to a site of a leading end of a cutting edge 12 in contact with a workpiece by setting an inclined surface which is ground to give an angle at which the coolant ejected from an ejection hole 18 is ejected toward the cutting edge 12 at the leading end (Abstract and Fig. 4).

Where the above-described configuration is applied to cooling of the cutting edge of the cutting tool, coolant is supplied to a site of the leading end of each of the plurality of cutting edges formed by side surfaces on both sides which are raised at a side portion in contact with a workpiece.

However, frictional heat of the cutting edge derived from cutting is transmitted not only to the leading end of the cutting edge but also to an entire area of the cutting edge raised at a side portion in the longitudinal direction. The above-described configuration is not able to cool the entire area or does not necessarily achieve efficient cooling of the cutting edge.

As to the above-described cutting tool, there has been proposed no configuration that cools a wide area of the cutting edge.

Further prior art cutting tools having an integrated cooling system are described in FR 1 287 927 A, EP 2 915 616 A1, EP 3 178 593 A1, DE 10 2009 030587 B3, DE 102 07 661 A1, US 960 526 A and DE 31 04 752 A1.

### [Summary of the Invention]

### [Technical Problem]

An object of the present invention is to provide, in a cutting tool which has cutting edges formed by a plurality of side surfaces on both sides raised in a side portion along a longitudinal direction, a configuration in which a coolant is supplied not only to a leading end of the cutting edge but also to an area facing a rotating direction side, thereby achieving efficient cooling of the cutting edge and removing chips from the cutting edge.

### [Solution for Problem]

In order to achieve the above object, the present invention provides a cutting tool according to claim 1.

Further, the present invention also provides a cutting tool according to claim 2.

### [Advantageous Effects of Invention]

In the present invention standing on the basic configuration, a direction at which each of the plurality of branched coolant passage pipes is projected is along the raised side surface on the rotating direction side. Therefore, coolant ejected from an ejection hole at the leading end of the coolant passage pipe flows along the raised side surface, thus making it possible to efficiently cool a wide area which forms the cutting edge.

Further, the coolant which has flowed from the ejection hole flows up to the leading end of the cutting edge and a site thereof in contact with a workpiece, thus making it possible to efficiently remove chips from the cutting edge.

The coolant ejected from the ejection hole contains flowing components in an ejection direction and in the rotating direction at an initial stage of ejection. However, a flow rate in the projection direction is apparently larger than a rotational speed at the ejection hole and, therefore, the flowing components in the rotating direction will disappear due to air resistance. After the disappearance, the coolant is subjected to a pressure along the rotating direction on the raised side surface to exhibit such a flowing state that the side surface is increased in flowing area. And it is possible to reliably provide aforementioned effects.

### [Brief Explanation on Drawings]

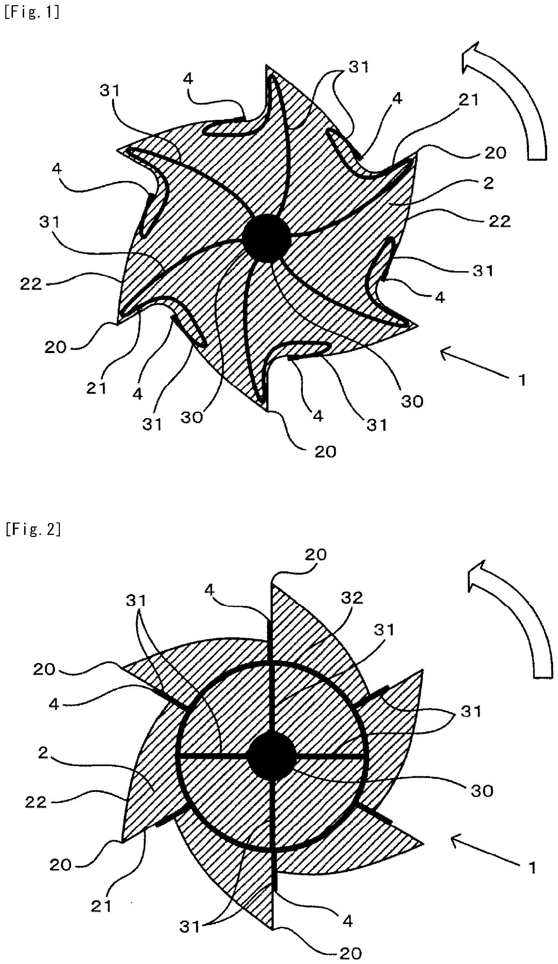

Fig. 1 shows a cross sectional view of a cutting tool according to the present invention with a configuration of Example 1 in a direction orthogonal to a longitudinal direction thereof.
Fig. 2 shows a cross sectional view of a cutting tool according to the present invention with a configuration of Example 2 in a direction orthogonal to a longitudinal direction thereof.

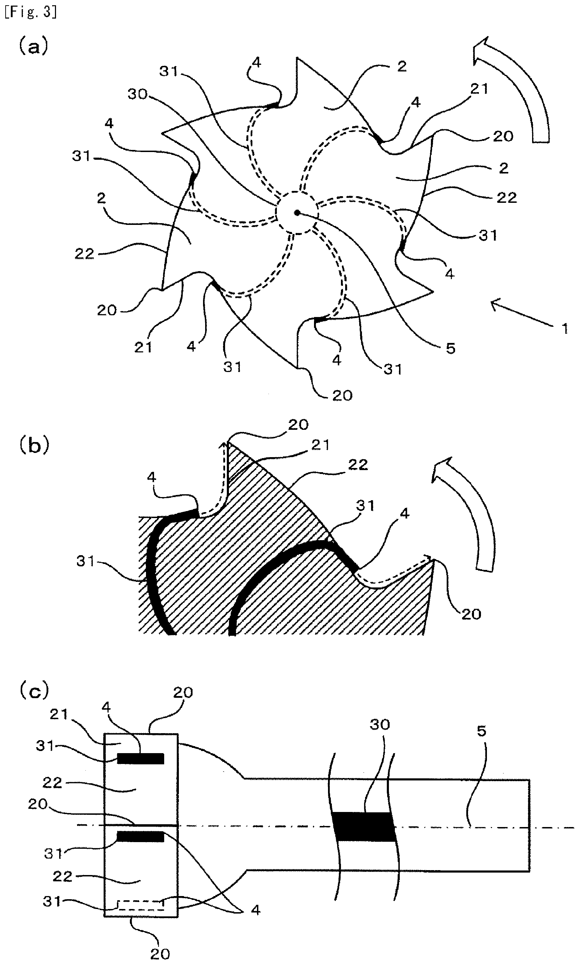

Fig. 3 shows a first embodiment according to the present invention in which a projected portion of a branched coolant passage pipe is at a raised end site or in the vicinity thereof on a side surface on a rotating direction side. Fig. 3(a) is a front view which shows the leading end side thereof (an area of the coolant passage pipe present inside a cutting edge is indicated by a dotted line, a projected area thereof is indicated by a solid line, and the rotating direction of the cutting edge is indicated by a white arrow). Fig. 3(b) is a cross sectional view thereof in a direction orthogonal to the longitudinal direction and shows a flowing state of coolant, with attention given to two cutting edges (a flowing direction of the coolant is indicated by a dotted-line arrow, and the rotating direction of the cutting edge is indicated by a white arrow). Fig. 3(c) is a transverse sectional view along the longitudinal direction of the cutting tool.
Fig. 4 shows a second embodiment according to the present invention in which a projected portion of a branched coolant passage pipe is at a halfway site on a side surface on a rotating direction side. Fig. 4(a) is a front view of the leading end side thereof (an area of the coolant passage pipe present inside the cutting edge is indicated by a dotted line, a projected area thereof is indicated by a solid line, and the rotating direction of the cutting edge is indicated by a white arrow). Fig. 4(b) is a cross sectional view thereof in a direction orthogonal to the longitudinal direction and shows a flowing state of coolant, with attention given to two cutting edges (a flowing direction of the coolant is indicated by a dotted line arrow and the rotating direction of the cutting edge is indicated by a white arrow). Fig. 4(c) is a transverse sectional view along the longitudinal direction of the cutting tool.

### [Description of Embodiments]

As shown in Fig. 3(a), (b), (c) and Fig. 4(a), (b), (c), in the basic configuration which is based on a cutting tool 1 having cutting edges 2 formed by a plurality of side surfaces on both sides 21, 22 raised at a side portion along a longitudinal direction, a plurality of coolant passage pipes 31 branched from a coolant passage pipe 30 extended around a rotation center are projected along the raised side surface 21 on a rotating direction side, of the side surfaces on both sides 21, 22.

In the first embodiment, as shown in Fig. 3(a), (b), (c), a projected portion of the branched coolant passage pipe 31 is at a raised end site on the side surface 21 on the rotating direction side or in the vicinity of an interior thereof.

In the first embodiment, after being ejected from an ejection hole 4 positioned at the leading end of the projected coolant passage pipe 31, coolant flows from the vicinity of the raised end site up to a leading end 20 of the cutting edge. As described previously, a flowing area of the coolant is subjected to a pressure along the rotating direction and increased thereby, thus making it possible to cool a wide area of the raised side surface 21.

As shown in Fig. 3(a) and (b) in particular, where a raised side surface 21 on the rotating direction side and a raised side surface 22 on reverse to the rotating direction side of the adjacent cutting edge 2 is connected by an inwardly recessed curve surface, the ejected coolant smoothly flows on the raised side surface 21 on the rotating direction side from the end site thereof, thus making it possible to reliably achieve the efficient cooling.

In the second embodiment, as shown in Fig. 4(a), (b), (c), a projected portion of the branched coolant passage pipe 31 is at a halfway site on the raised side surface 21 on the rotating direction side.

In the second embodiment, coolant flows up to the leading end 20 of the cutting edge along a part of the raised side surface 21 on the rotating direction side. The second embodiment may be slightly lower in cooling efficiency than the first embodiment in that the coolant does not necessarily flow through a substantially entire area.

However, the raised side surface 21 on the rotating direction side is not made flat as shown in Fig. 4(a), but there is adopted, as shown in Fig. 4(b), such a shape that the raised side surface 21 from the projected position of the branched coolant passage pipe 31 to the leading end 20 of the cutting edge assumes an inwardly recessed curved shape. In this case, it is possible to correct the flowing area which is narrow in width to a substantial extent.

Further, in the second embodiment, as shown in Fig. 4(a), (b), such a simple design can be adopted that the coolant passage pipe 31 is projected on the raised side surface 21 on the rotating direction side.

As shown in Fig. 3(a), (c) and Fig. 4(a), (c), the cutting edge 2 according to the basic configuration is such that the cutting edge 2 is in most cases provided at the leading end in the longitudinal direction or in the vicinity thereof. However, a position at which the cutting edge is provided is not necessarily limited to the above-described position but the cutting edge can be provided at a halfway site in the longitudinal direction.

In order that coolant flows in a wide area of the raised side surface 21 on the rotating direction side after being ejected from the ejection hole 4, as shown in Fig. 3(c) and Fig. 4(c), it is preferable that the branched coolant passage pipe 31 is designed so as to have a predetermined width along the longitudinal direction in an entire branched area or in a halfway-site area leading to the ejection hole 4 at a leading end, that is, that the ejection hole 4 is formed in a long and narrow shape along the longitudinal direction.

As described in the section of Advantageous Effects of Invention, on the raised side surface 21 on the rotating direction side, coolant is subjected to a pressure along the rotating direction, thereby exhibiting a flowing state that the side surface 21 is increased in flowing area.

Where the flowing area is increased beyond a width direction of the side surface 21, that is, a direction orthogonal to a direction from the end site of the side surface 21 to the leading end due to an increase in flowing area, there is a slight possibility that coolant may leak from the side surface 21.

However, in the case that on the side surface 21, a projected portion which faces to the side in the rotating direction is provided along a direction from the raised end site to the leading end at both ends in a direction orthogonal to the above direction, aforementioned possibility can be avoided.

Hereinafter, a description will be given by following examples.

### [Example 1]

As shown in Fig. 1, in Example 1, a coolant passage pipe 30 extended along a longitudinal direction is adopted, and a branched coolant passage pipe 31 assumes such a shape that the pipe forms a detour at the vicinity of the leading end of the raised side surfaces on both sides 21, 22 and then reaches the projected position (Fig. 1 shows a mode of the cutting edge 2 based on the first embodiment).

In Example 1, the detour configuration is provided in the vicinity inside the leading end 20 of the cutting edge, thus making it possible to promote cooling of the cutting edge 2.

### [Example 2]

As is shown in Fig.2, in Example 2, a coolant passage pipe 30 which is extended in a longitudinal direction is adopted and, as shown in Fig. 2, a ring-shaped coolant passage pipe 32 along the rotating direction in the vicinity inside an end site of a raised side surface 21 on the rotating direction side is interposed between the coolant passage pipe 31 branched from the extended coolant passage pipe 30 and the coolant passage pipe 31 leading to each ejection hole 4 (Fig. 2 shows a mode of the cutting edge 2 based on the second embodiment).

As shown in Example 2, by the interposition of the coolant passage pipe 32 formed in a ring shape along the rotating direction, that is, in the ring shape at the center of a rotation center axis 5, to connect a raised side surface 21 of each of the cutting edges 2 on the rotating direction side to a raised side surface 22 on reverse to the rotating direction side, both end sites are cooled to promote further efficient cooling in each of the previous embodiments.

### [Industrial Applicability]

As described so far, according to the cutting tool in the present invention, it is possible to cool efficiently not only the leading end of a cutting edge responsible for heating but also a raised side surface on a rotating direction side. It is also possible to remove reliably chips produced on a raised side surface on the rotating direction side, which greatly contributes to usefulness of the invention.

### [Explanation on Signs]

1: Cutting tool
2: Cutting edge
20: Leading end of cutting edge
21: Raised side surface on a rotating direction side
22: Raised side surface on reverse to rotating direction side
30: Coolant passage pipe extended along periphery of rotation center axis
31: Radially branched coolant passage pipe
32: Ring-shaped coolant passage pipe
4: Ejection hole
5: Rotation center axis

## Claims

1. A cutting tool (1) having cutting edges (2) formed by a plurality of side surfaces (21, 22) raised regularly along a rotating direction around a rotation center axis (5) at a side portion along a longitudinal direction, and wherein in the cutting tool (1) a coolant passage pipe (30) is extended around the rotation center axis (5), **characterised in that** in a front view of the cutting tool (1) branched coolant passage pipes (31) branched from the extended coolant passage pipe (30) are projected along a direction of a raised side surface on the rotating direction side (21) of the raised side surfaces (21, 22), and wherein a projected portion of each of the branched coolant passage pipes (31) is provided at an end site of a respective one of the raised side surfaces on the rotating direction side (21) or in the vicinity thereof and faces the rotating direction side (21).

2. A cutting tool (1) having cutting edges (2) formed by a plurality of side surfaces (21, 22) raised regularly along a rotating direction around a rotation center axis (5) at a side portion along a longitudinal direction, and wherein in the cutting tool (1) a coolant passage pipe (30) is extended around the rotation center axis (5), **characterised in that** in a front view of the cutting tool (1) branched coolant passage pipes (31) branched from the extended coolant passage pipe (30) are projected along a direction of a raised side surface on the rotating direction side (21) of the raised side surfaces (21, 22), and wherein a projected portion of each of the branched coolant passage pipes (31) is at a halfway site on a respective one of the raised side surfaces on the rotating direction side (21).

3. The cutting tool (1) according to Claim 2, wherein a raised side surface from the projected portion of the branched coolant passage pipes (31) to the leading end (20) of the respective cutting edge (2) assumes an recessed curve shape reverse to the rotating direction side.

4. The cutting tool (1) according to any one of Claims 1, 2, 3, wherein an ejection hole (4) at the leading end (20) of each of the branched coolant passage pipes (31) assumes a long and narrow shape along the longitudinal direction.

5. The cutting tool (1) according to any one of Claims 1, 2,3, 4, wherein each of the branched coolant passage pipes (31) assumes such a shape formed by sequently changing its direction that the pipe forms a detour at the vicinity of the leading end (20) of the raised side surfaces on both sides (21, 22) and then reaches the projected portion.

6. The cutting tool (1) according to any one of Claims 1, 2, 3, 4, 5, wherein a ring-shaped coolant passage pipe (32) along the rotating direction in a position between the end side and the rotation center axis (5), and in a nearer position to the end site compared with the position of the rotation center axis (5) is interposed between each of the branched coolant passage pipes (31) branched from the extended coolant passage pipe (30) and the branched coolant passage pipes (31) leading to each ejection hole (4).

## Patentansprüche

1. Schneidwerkzeug (1), das Schneidkanten (2) aufweist, die durch eine Vielzahl von Seitenoberflächen (21, 22) gebildet sind, die regelmäßig entlang einer Drehrichtung um eine Drehzentrumsachse (5) herum an einem Seitenabschnitt entlang einer Längsrichtung angehoben sind, und wobei in dem Schneidwerkzeug (1) ein Kühlmitteldurchgangsrohr (30) um die Drehzentrumsachse (5) herum erstreckt ist,
**dadurch gekennzeichnet, dass** in einer Frontansicht des Schneidwerkzeugs (1) abgezweigte Kühlmitteldurchgangsrohre (31), die von dem erstreckten Kühlmitteldurchgangsrohr (30) abgezweigt sind, entlang einer Richtung einer angehobenen Seitenoberfläche auf der Drehrichtungsseite (21) der angehobenen Seitenoberflächen (21, 22) vorstehen, und
wobei ein vorstehender Abschnitt von jedem der abgezweigten Kühlmitteldurchgangsrohre (31) an einer Endstelle einer jeweiligen der angehobenen Seitenoberflächen auf der Drehrichtungsseite (21) oder in der Nähe davon vorgesehen ist und der Drehrichtungsseite (21) zugewandt ist.

2. Schneidwerkzeug (1), das Schneidkanten (2) aufweist, die durch eine Vielzahl von Seitenoberflächen (21, 22) gebildet sind, die regelmäßig entlang einer Drehrichtung um eine Drehzentrumsachse (5) herum an einem Seitenabschnitt entlang einer Längsrichtung angehoben sind, und wobei in dem Schneidwerkzeug (1) ein Kühlmitteldurchgangsrohr (30) um die Drehzentrumsachse (5) herum erstreckt ist,
**dadurch gekennzeichnet, dass** in einer Frontansicht des Schneidwerkzeugs (1) abgezweigte Kühlmitteldurchgangsrohre (31), die von dem erstreckten Kühlmitteldurchgangsrohr (30) abgezweigt sind, entlang einer Richtung einer angehobenen Seitenoberfläche auf der Drehrichtungsseite (21) der angehobenen Seitenoberflächen (21, 22) vorstehen, und
wobei ein vorstehender Abschnitt von jedem der abgezweigten Kühlmitteldurchgangsrohre (31) an einer Stelle auf halbem Weg auf einer jeweiligen der angehobenen Seitenoberflächen auf der Drehrichtungsseite (21) ist.

3. Schneidwerkzeug (1) nach Anspruch 2, wobei eine angehobene Seitenoberfläche von dem vorstehenden Abschnitt der abgezweigten Kühlmitteldurchgangsrohre (31) bis zu dem voreilenden Ende (20) der jeweiligen Schneidkante (2) eine ausgesparte Kurvenform annimmt, die umgekehrt zur Drehrichtungsseite ist.

4. Schneidwerkzeug (1) nach einem der Ansprüche 1, 2, 3, wobei ein Ausstoßloch (4) an dem voreilenden Ende (20) von jedem der abgezweigten Kühlmitteldurchgangslöcher (31) eine lange und schmale Form entlang der Längsrichtung annimmt.

5. Schneidwerkzeug (1) nach einem der Ansprüche 1, 2, 3, 4, wobei jedes der abgezweigten Kühlmitteldurchgangsrohre (31) eine durch aufeinanderfolgendes Ändern seiner Richtung gebildete derartige Form annimmt, dass das Rohr in der Nähe des voreilenden Endes (20) der angehobenen Seitenoberflächen auf beiden Seiten (21, 22) einen Umweg bildet und dann den vorstehenden Abschnitt erreicht.

6. Schneidwerkzeug (1) nach einem der Ansprüche 1, 2, 3, 4, 5, wobei ein ringförmiges Kühlmitteldurchgangsrohr (32) entlang der Drehrichtung in einer Position zwischen der Endseite und der Drehzentrumsachse (5), und in einer näheren Position zu der Endstelle im Vergleich zu der Position der Drehzentrumsachse (5) zwischen jedem der abgezweigten Kühlmitteldurchgangsrohre (31), die von dem erstreckten Kühlmitteldurchgangsrohr (30) abgezweigt sind, und den zu jedem Ausstoßloch (4) führenden abgezweigten Kühlmitteldurchgangsrohren (31) zwischenpositioniert ist.

## Revendications

1. Outil de découpe (1) présentant des bords de coupe (2) formés par une pluralité de surfaces latérales (21, 22) surélevées régulièrement le long d'une direction de rotation autour d'un axe central de rotation (5) sur une partie latérale le long d'une direction longitudinale, et dans lequel, dans l'outil de découpe (1), un tuyau de passage de liquide de refroidissement (30) est étendu autour de l'axe central de rotation (5), **caractérisé en ce que** dans une vue frontale de l'outil de découpe (1), des tuyaux de passage de liquide de refroidissement ramifiés (31) ramifiés à partir du tuyau de passage de liquide de refroidissement étendu (30) se projettent le long d'une direction d'une surface latérale surélevée sur le côté de direction de rotation (21) des surfaces latérales surélevées (21, 22), et
dans lequel une partie projetée de chacun des tuyaux de passage de liquide de refroidissement ramifiés (31) est ménagée sur une extrémité d'une surface respective des surfaces latérales surélevées sur le côté de direction de rotation (21) ou à proximité de celle-ci et fait face au côté de direction de rotation (21).

2. Outil de découpe (1) présentant des bords de coupe (2) formés par une pluralité de surfaces latérales (21, 22) surélevées régulièrement le long d'une direction de rotation autour d'un axe central de rotation (5) sur une partie latérale le long d'une direction longitudinale, et dans lequel dans l'outil de découpe (1), un tuyau de passage de liquide de refroidissement (30) est étendu autour de l'axe central de rotation (5), **caractérisé en ce que**, dans une vue frontale de l'outil de découpe (1), des tuyaux de passage de liquide de refroidissement ramifiés (31) ramifiés à partir du tuyau de passage de liquide de refroidissement étendu (30) se projettent le long d'une direction d'une surface latérale surélevée sur le côté de la direction de rotation (21) des surfaces latérales surélevées (21, 22), et
dans lequel une partie projetée de chacun des tuyaux de passage du liquide de refroidissement ramifiés (31) est à mi-chemin sur une surface respective des surfaces latérales surélevées sur le côté de la direction de rotation (21).

3. Outil de découpe (1) selon la revendication 2, dans lequel une surface latérale surélevée à partir de la partie projetée des tuyaux de passage de liquide de refroidissement ramifiés (31) vers l'extrémité avant (20) du bord de coupe respectif (2) prend une forme de courbe creuse inversée par rapport au côté de direction de rotation.

4. Outil de découpe (1) selon l'une quelconque des revendications 1, 2, 3, dans lequel un orifice d'éjection (4) à l'extrémité avant (20) de chacun des tuyaux de passage de liquide de refroidissement ramifiés (31) prend une forme longue et étroite le long de la direction longitudinale.

5. Outil de découpe (1) selon l'une quelconque des revendications 1, 2, 3, 4, dans lequel chacun des tuyaux de passage de liquide de refroidissement ramifiés (31) prend une forme telle que, en changeant de manière séquentielle sa direction, le tuyau forme un détour à proximité de l'extrémité avant (20) des surfaces latérales surélevées des deux côtés (21, 22) et ensuite atteint la partie projetée.

6. Outil de découpe (1) selon l'une quelconque des revendications 1, 2, 3, 4, 5, dans lequel un tuyau de passage de liquide de refroidissement de forme annulaire (32) le long de la direction de rotation dans une position entre le côté extrême et l'axe central de rotation (5), et dans une position plus proche du site d'extrémité par rapport à la position de l'axe central de rotation (5) est intercalé entre chacun des tuyaux de passage de liquide de refroidissement ramifiés (31) ramifiés depuis le tuyau de passage de liquide de refroidissement étendu (30), et les tuyaux de passage de liquide de refroidissement ramifiés (31) menant à chaque orifice d'éjection (4).
